# FASCICULE DE BREVET EUROPEEN

(11) **EP 1 349 761 B1**
(45) Date de publication et mention de la délivrance du brevet: **19.08.2009**
(21) Numéro de dépôt: 01999499.5
(22) Date de dépôt: 03.12.2001
(51) Int. Cl.: B60T 13/567

(54) **SERVOMOTEUR D'ASSISTANCE AU FREINAGE POUR VEHICULE AUTOMOBILE**
BREMSKRAFTVERSTÄRKER FÜR KRAFTFAHRZEUG
BRAKE BOOSTER FOR MOTOR VEHICLE

(30) Priorité: 06.12.2000 FR 0015943
(43) Date de publication de la demande: 08.10.2003
(73) Titulaire: ROBERT BOSCH GMBH, 70442 Stuttgart (DE)
(72) Inventeur: LEBOISNE, Cédric, F-75011 PARIS (FR); MOINARD, Patrice, F-93100 MONTREUIL (FR); FERREIRA, Rui, F-92360 MEUDON-LA-FORET (FR)
(74) Mandataire: Hurwic, Aleksander Wiktor
(86) Numéro de dépôt international: PCT/FR2001/003808
(87) Numéro de publication internationale: WO 2002/046012

(56) Documents cités:
- EP-A- 0 765 789
- US-A- 4 433 614
- US-A- 5 279 203

## Description

L'invention concerne un servomoteur d'assistance au freinage pour véhicule automobile.

US-A-4433 614 décrit un servomoteur pneumatique d'assistance de freinage comportant un manchon assurant la retenue axiale vers l'arrière du piston.

De façon connue, un servomoteur est agencé entre une tige de commande entraînée par une pédale de frein et un maître-cylindre d'un circuit de freinage pour amplifier l'effort appliqué à la pédale et le transmettre au piston du maître-cylindre et il comprend un boîtier partagé en une chambre avant reliée à la dépression moteur et une chambre arrière à pression sélectivement variable entre la dépression moteur et la pression atmosphérique. La différence de pression entre les deux chambres agit sur un piston monté dans le boîtier entre la tige de commande et le piston du maître-cylindre.

La tige de commande est reliée à ce piston du servomoteur par l'intermédiaire d'un clapet de commande d'alimentation de la chambre arrière du boîtier, qui est monté à l'intérieur d'une partie tubulaire arrière du piston du servomoteur et qui comprend un organe tubulaire cylindrique à l'intérieur duquel est reçue une rotule formant l'extrémité avant de la tige de commande.

La paroi transversale arrière du boîtier du servomoteur est formée, en général par emboutissage, avec une cheminée axiale de forme cylindrique qui s'étend vers l'arrière et qui comprend un rebord arrière orienté radialement vers l'axe et formant une butée limitant le déplacement axial vers l'arrière du piston du servomoteur.

Quand le boîtier du servomoteur est en tôle relativement épaisse, par exemple d'environ 1,5 mm, et que la longueur axiale de la cheminée formée par emboutissage n'est pas trop importante, l'épaisseur du rebord arrière de la cheminée est suffisante pour résister à un effort d'arrachement de la tige de commande qui, dans des cahiers des charges de constructeurs automobiles, est fixé à une valeur d'environ 200-250 daN.

Quand le boîtier du servomoteur est en tôle moins épaisse, notamment lorsque ses parois transversales d'extrémité sont reliées rigidement entre elles par des tirants, et quand la longueur axiale de la cheminée est augmentée, notamment lorsque le maître-cylindre est un peu déplacé axialement vers l'intérieur du servomoteur pour diminuer l'encombrement axial vers l'avant de l'ensemble servomoteur et maître-cylindre, l'épaisseur du rebord arrière de la cheminée formée par emboutissage est relativement faible, par exemple de l'ordre de 0,4 mm, et ne permet plus de résister à un effort de traction d'environ 200 à 250 daN sur la tige de commande.

L'invention a notamment pour but d'apporter une solution simple, efficace et peu coûteuse à ce problème.

Elle a également pour but de résoudre ce problème sans modifier de façon complexe et coûteuse les systèmes préexistants de servomoteurs et de maîtres-cylindres.

Elle propose à cet effet un servomoteur d'assistance au freinage pour véhicule automobile, comprenant un boîtier dans lequel un piston est déplaçable axialement par une tige de commande entraînée par une pédale de frein et ayant une extrémité avant montée dans un organe cylindrique de commande à l'intérieur du piston dont une partie tubulaire cylindrique arrière est guidée à étanchéité dans une cheminée cylindrique du boîtier, **caractérisé en ce que** des moyens de retenue axiale du piston, limitant son déplacement vers l'arrière, sont formés par une partie intermédiaire de la cheminée.

Quand la cheminée est formée par emboutissage d'une tôle relativement mince telle que celle d'un boîtier à tirants du type décrit ci-dessus, son épaisseur dans sa partie médiane reste suffisante pour résister à un effort de traction d'environ 200 à 250 daN sur la tige de commande, même lorsque la longueur de la cheminée a été augmentée pour tenir compte d'un déplacement vers l'arrière du maître-cylindre par rapport au servomoteur.

Dans un mode de réalisation préféré de l'invention, les moyens de retenue axiale du piston sont formés par un épaulement interne de la cheminée, qui raccorde une partie arrière de diamètre réduit à une partie avant de la cheminée.

Le piston du servomoteur comprend à sa partie arrière des moyens destinés à coopérer avec les moyens de retenue axiale formés dans la cheminée.

Avantageusement, une bague annulaire est interposée entre les moyens de retenue axiale de la cheminée et les moyens correspondants du piston.

Cette bague annulaire forme une entretoise radiale entre les moyens du piston et ceux de la cheminée et permet de réduire à un minimum les modifications qu'il faut apporter à des cheminées et à des pistons standards.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un ensemble servomoteur et maître-cylindre de freinage, dans laquelle la demi-vue inférieure représente un ensemble connu de la technique antérieure et la demi-vue supérieure un ensemble selon l'invention ;
- la figure 2 est une vue schématique en coupe axiale, à plus grande échelle, de la partie arrière d'un servomoteur selon l'invention.

Par convention, dans toute la description, l'avant correspond à ce qui est du côté gauche dans les dessins et l'arrière à ce qui est du côté droit.

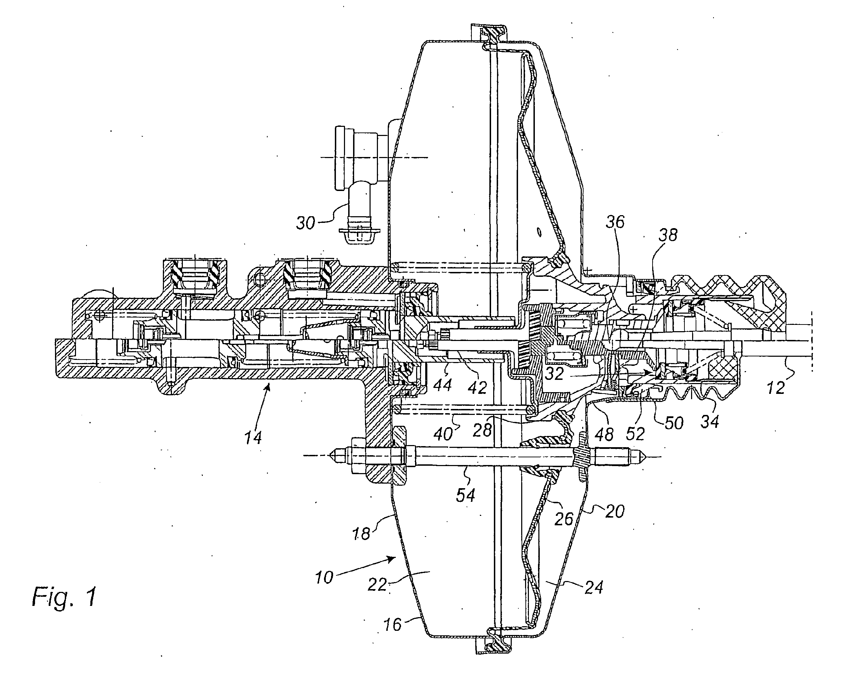

En figure 1, la référence 10 désigne un servomoteur pneumatique d'assistance au freinage, qui est associé d'une part par une tige de commande 12 à une pédale de frein non représentée et d'autre part à un maître-cylindre 14 d'un circuit hydraulique de freinage.

Le servomoteur 10 comprend un boîtier 16 sensiblement cylindrique formé par l'assemblage face à face d'une paroi annulaire avant 18 et d'une paroi annulaire arrière 20 raccordées de façon étanche à leur périphérie externe, ce boîtier étant partagé de façon étanche en une chambre avant 22 et une chambre arrière 24 par une cloison interne annulaire 26 qui s'étend radialement à l'intérieur du boîtier 16, entre sa périphérie externe et un piston central 28 déplaçable axialement dans le boîtier 16 par la tige de commande 12.

La chambre avant 22 est reliée par un raccord 30 à une source de vide qui est par exemple la dépression moteur dans le cas d'un véhicule à essence, ou une pompe à vide dans le cas d'un véhicule à moteur Diesel. La pression régnant dans la chambre arrière 24 est commandée de façon connue par un système de clapet 32 qui est monté à l'intérieur d'une partie arrière 34 du piston 28, cette partie arrière 34 étant de forme cylindrique tubulaire et s'étendant axialement vers l'arrière.

Le système de clapet 32 est actionné par l'extrémité avant de la tige de commande 12, cette extrémité avant en forme de rotule 36 étant logée à l'intérieur d'un organe cylindrique de commande 38 qui est guidé en coulissement axial à l'intérieur du piston 28.

Du côté avant, le piston 28 est associé à un ressort de rappel 40 monté entre son extrémité avant et la paroi annulaire avant 18 du boîtier 16 pour solliciter constamment le piston 28 vers l'arrière. L'extrémité avant du piston 28 est également reliée par une tige de poussée 42 à un piston primaire 44 du maître-cylindre 14.

Dans cet agencement connu, le déplacement axial vers l'avant de la tige de commande 12 entraînée par la pédale de frein se traduit par un déplacement vers l'avant du piston 28 qui est transmis au piston primaire 44 du maître-cylindre 14 pour alimenter un circuit de freinage en fluide hydraulique sous pression. La force de déplacement du piston 28 par la tige de commande 12 est amplifiée par la différence de pression entre les chambres 22 et 24 du servomoteur, la chambre avant 22 étant reliée à la dépression moteur tandis que la chambre arrière 24 est à une pression que le système de clapet 32 fait varier entre la dépression moteur et la pression atmosphérique en fonction des déplacements de la tige de commande 12.

Dans la demi-vue inférieure de la figure 1, qui représente un ensemble connu de la technique antérieure, la paroi arrière 20 du boîtier 16 du servomoteur comporte une cheminée sensiblement cylindrique 48 qui s'étend axialement vers l'arrière et qui comporte un rebord arrière 50, s'étendant radialement vers l'axe et formant des moyens de retenue limitant le déplacement axial vers l'arrière du piston 28 par l'intermédiaire de moyens 52 d'étanchéité et de guidage du piston 28.

Selon des cahiers des charges donnés par des constructeurs automobiles, ce rebord d'extrémité arrière 50 doit résister à un effort de traction ou d'arrachement d'une valeur d'environ 200-250 daN qui est exercé vers l'arrière sur la tige de commande 12 et qui est transmis au rebord 50 par l'intermédiaire de l'organe de commande 38 et du piston 28.

La cheminée 48 est formée par emboutissage de la partie centrale de la paroi arrière 20 et son épaisseur diminue progressivement de son extrémité avant à son extrémité arrière. Quand la paroi 20 est en tôle ayant une certaine épaisseur, par exemple d'environ 1,5 mm, et si la longueur axiale de la cheminée n'est pas trop importante, l'épaisseur du rebord arrière 50 de la cheminée est d'environ 0,9 mm et peut résister à l'effort d'arrachement précité d'une valeur de 200-250 daN. Par contre, quand le boîtier 10 est réalisé en tôle moins épaisse, notamment lorsque ses parois transversales d'extrémité sont reliées rigidement entre elles par des tirants 54 comme représenté schématiquement en figure 1, l'épaisseur du rebord arrière 50 de la cheminée 48 peut être inférieure à 0,4 mm et ne permet plus en général de résister à l'effort d'arrachement précité.

Ce phénomène est aggravé lorsque, pour diminuer l'encombrement axial à l'avant de l'ensemble servomoteur 10 et maître-cylindre 14, le maître-cylindre est un peu décalé vers l'arrière à l'intérieur du boîtier 16, comme représenté dans la partie supérieure de la figure 1. Ce décalage du maître-cylindre vers l'arrière oblige en effet à déplacer vers l'arrière la position du système de clapet 32 et de l'organe de commande 38 et donc à augmenter la longueur axiale de la cheminée 48, comme représenté dans la partie supérieure de la figure 1. Cet allongement axial de la cheminée 48 se traduit par une diminution supplémentaire de l'épaisseur du rebord radial 50, qui ne résiste plus à l'effort d'arrachement précité.

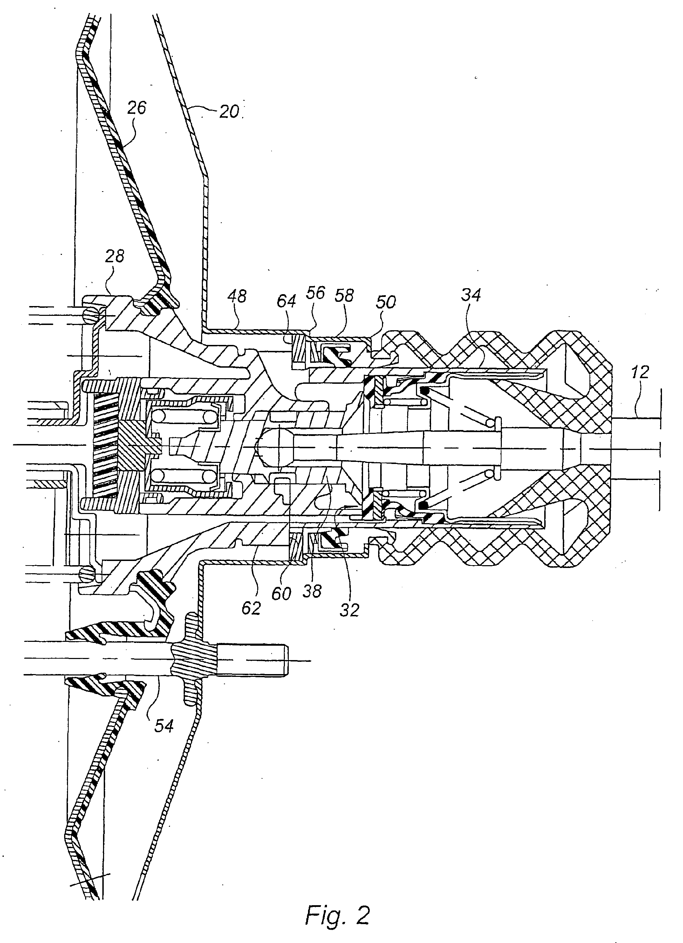

Pour pallier cet inconvénient, l'invention prévoit, comme représenté schématiquement en partie supérieure de la figure 1 et de façon mieux visible en figure 2, de former un épaulement interne 56 dans une partie intermédiaire ou sensiblement médiane de la cheminée 48, cet épaulement interne raccordant une partie arrière 58 de la cheminée, ayant un diamètre réduit, à une partie avant de la cheminée.

Cet épaulement interne 56 de la cheminée est destiné à coopérer par butée avec des moyens appropriés 60 de la surface périphérique extérieure du piston 28, tels qu'un épaulement 60 raccordant la partie cylindrique tubulaire arrière 34 du piston à une partie cylindrique intermédiaire 62 de ce piston ayant un diamètre supérieur.

Avantageusement, une rondelle ou bague annulaire 64 est agencée entre les épaulements 56 de la cheminée 48 et 60 du piston 28, à l'intérieur de la cheminée 48 et autour du piston 28, cette bague annulaire ayant un diamètre externe sensiblement égal ou très légèrement inférieur au diamètre interne de la partie avant de la cheminée 48, et un diamètre interne qui est inférieur au diamètre externe de l'épaulement 60 du piston 28.

Dans ces conditions, l'épaulement 56 de la cheminée 48 remplit la fonction de retenue axiale du piston, remplie par le rebord arrière 50 de la cheminée dans la réalisation connue représentée en partie inférieure de la figure 1. Cet épaulement 56 formé dans une partie intermédiaire de la cheminée 48, a une épaisseur supérieure à celle du rebord arrière 50 et peut résister à l'effort d'arrachement précité, même lorsque la paroi arrière 20 du boîtier 16 a une épaisseur relativement faible, par exemple d'environ 0,8 mm.

La bague annulaire 64 permet d'adapter, par un choix approprié de son diamètre interne et de son épaisseur axiale, le diamètre et la position axiale de l'épaulement 56 de la cheminée au diamètre et à la position axiale de l'épaulement 60 du piston 28.

Comme dans la technique connue, la cheminée 48 du servomoteur selon l'invention peut comprendre un rebord arrière 50 pour le maintien en place de moyens d'étanchéité et de guidage de la partie tubulaire cylindrique 34 du piston 28. Mais ce rebord arrière 50 n'est plus destiné à résister à un effort important de traction ou d'arrachement exercé sur la tige de commande 12, qui est supporté par l'épaulement intermédiaire 56 de la cheminée.

Par des moyens simples et peu coûteux, comprenant la formation de l'épaulement 56 lors de l'emboutissage de la cheminée 48 et la mise en place éventuelle de la bague annulaire 64, l'invention permet de résoudre le problème de la résistance à un effort de traction ou d'arrachement exercé sur la tige de commande 12, dans le cas où le boîtier 16 du servomoteur est en tôle d'épaisseur faible et où le maître-cylindre a été reculé légèrement à l'intérieur du boîtier 16 pour réduire l'encombrement axial vers l'avant.

L'invention s'applique notamment à l'industrie automobile et principalement à l'industrie du freinage pour véhicules automobiles, notamment pour les voitures particulières.

## Revendications

1. Servomoteur d'assistance au freinage pour véhicule automobile, comprenant un boîtier (**16**) dans lequel un piston (**28**) est déplaçable axialement par une tige de commande (**12**) entraînée par une pédale de frein et ayant une extrémité avant montée dans un organe de commande (**38**) à l'intérieur du piston (**28**) dont une partie cylindrique tubulaire arrière (**34**) est guidée à étanchéité dans une cheminée cylindrique du boîtier (**16**), ledit servomoteur comportant également des moyens de retenue axiale du piston (**28**), limitant son déplacement vers l'arrière, formés par une extrémité longitudinale arrière de la cheminée formant butée et par une partie arrière (58) de la cheminée ayant un diamètre réduit et en appui par un épaulement interne (56) raccordant ladite partie arrière (58) de la cheminée contre la butée.

2. Servomoteur selon la revendication 1, **caractérisé en ce que** les moyens de retenue axiale du piston (28) sont formés par un épaulement interne (56) de la cheminée, qui raccorde une partie avant à une partie arrière (58) de diamètre réduit de la cheminée.

3. Servomoteur selon la revendication 1 ou 2, **caractérisé en ce que** la surface périphérique externe du piston (28) comprend des moyens coopérant avec les moyens de retenue axiale (56) formés sur la cheminée (48).

4. Servomoteur selon la revendication 3, **caractérisé en ce que** les moyens précités du piston (28) sont formés par un épaulement (60) de sa surface externe, raccordant une partie arrière de diamètre réduit à une partie avant.

5. Servomoteur selon la revendication 3 ou 4, **caractérisé en ce qu'**une bague annulaire (64) est interposée entre les moyens de retenue axiale (56) formés sur la cheminée et les moyens coopérants (60) du piston.

6. Servomoteur selon l'une quelconque des revendications précédentes, **caractérisé en ce que** la cheminée (48) est formée par emboutissage d'une paroi arrière (20) du boîtier du servomoteur.

7. Servomoteur selon l'une quelconque des revendications précédentes, **caractérisé en ce que** les parois d'extrémité (18, 20) du boîtier (16) du servomoteur sont reliées rigidement par des tirants (54).

8. Servomoteur selon l'une quelconque des revendications précédentes, **caractérisé en ce qu'**il est associé à un maître-cylindre (14) qui s'étend axialement en partie à l'intérieur du boîtier (16) précité pour diminuer l'encombrement axial vers l'avant de l'ensemble formé par le servomoteur (10) et lé maître-cylindre (14).

## Claims

1. Servomotor for the assisted braking of a motor vehicle, comprising a casing (16), in which a piston (28) is axially movable by a control rod (12), which is driven by a brake pedal and the front end (36) of which is fitted in a control member (38) inside the piston (28), a rear cylindrical tubular section (34) of which is guided in a tight manner within a cylindrical shaft (48) provided at the casing (16), said servomotor also comprising axial-retaining means for the piston (28) limiting its reaward motion constituted by a rear axial end of the shaft forming abutment and by a rear part (58) of the shaft having a reduced diameter abuting by an inner shoulder (56) joining up said rear part (58) of the shaft against the abutment.

2. Servomotor according to claim 1, **characterised in that** the axial-retaining means for the piston (28) consist of an inner shoulder (56) provided in the shaft, connecting a front part with a reduced-diameter rear part (58) of the shaft.

3. Servomotor according to claim 1 or 2, **characterised in that** the outer peripheral surface of the piston (28) comprises means intended to cooperate with said axial-retaining means (56) provided at the shaft (48).

4. Servomotor according to claim 3, **characterised in that** said means provided on the piston (28) consist of a shoulder (60) at its outer surface, connecting a reduced-diameter rear section with a front section.

5. Servomotor according to claim 3 or 4, **characterised in that** an annular ring (64) is placed between the axial-retaining means (56), provided at the shaft, and the matching means (60) on the piston.

6. Servomotor according to any one of the preceding claims**, characterised in that** the shaft (48) is formed by means of a stamping operation carried out on a rear wall (20) of the servomotor casing.

7. Servomotor according to any one of the preceding claims, **characterised in that** the end walls (18, 20) of the servomotor casing (16) are rigidly interconnected by tie bars (54).

8. Servomotor according to any one of the preceding claims, **characterised in that** it is associated with a master cylinder (14) extending axially in part inside said casing (16), in order to reduce the axial extent of the assembly, consisting of the servomotor (10) and the master cylinder (14), in the forward direction.

## Patentansprüche

1. Servomotor zur Bremsunterstützung für ein Kraftfahrzeug, mit einem Gehäuse (16), in dem ein Kolben (28) über eine Steuerstange (12) axial beweglich ist, die von einem Bremspedal angetrieben wird und ein vorderes Ende aufweist, das in einem Steuerorgan (38) im Kolben (28) angebracht ist, bei dem ein hinterer rohrförmiger zylindrischer Abschnitt (34) in dichter Weise in einem zylindrischen Schacht des Gehäuses (16) geführt ist, wobei der Servomotor auch Mittel zum axialen Halten des Kolbens (28) aufweist, die dessen Verlagerung nach hinten begrenzen und durch ein hinteres Längsende des Schachts, das einen Anschlag bildet, und durch einen hinteren Abschnitt (58) des Schachts gebildet sind, der einen verringerten Durchmesser hat und über einen Innenabsatz (56), der den hinteren Abschnitt (58) des Schachts verbindet, am Anschlag anliegt.

2. Servomotor nach Anspruch 1, **dadurch gekennzeichnet, dass** die Mittel zum axialen Halten des Kolbens (28) durch einen Innenabsatz (56) des Schachts gebildet sind, der einen vorderen Abschnitt mit einem hinteren Abschnitt (58) des Schachts, der einen verringerten Durchmesser hat, verbindet.

3. Servomotor nach Anspruch 1 oder 2, **dadurch gekennzeichnet, dass** die äußere Umfangsfläche des Kolbens (28) Mittel aufweist, die mit den am Schacht (48) ausgebildeten Mitteln (56) zum axialen Halten zusammenwirken.

4. Servomotor nach Anspruch 3, **dadurch gekennzeichnet, dass** die Mittel des Kolbens (28) durch einen Absatz (60) seiner Außenfläche gebildet sind, der einen hinteren Teil mit verringertem Durchmesser mit einem vorderen Teil verbindet.

5. Servomotor nach Anspruch 3 oder 4, **dadurch gekennzeichnet, dass** ein ringförmiger Reifen (64) zwischen den am Schacht gebildeten Mitteln (56) zum axialen Halten und den damit zusammenwirkenden Mitteln (60) des Kolbens liegt.

6. Servomotor nach einem der vorhergehenden Ansprüche, **dadurch gekennzeichnet, dass** der Schacht (48) durch Tiefziehen einer hinteren Wand (20) des Gehäuses des Servomotors gebildet ist.

7. Servomotor nach einem der vorhergehenden Ansprüche, **dadurch gekennzeichnet, dass** die Endwände (18, 20) des Gehäuses (16) des Servomotors durch Zugbolzen (54) starr verbunden sind.

8. Servomotor nach einem der vorhergehenden Ansprüche, **dadurch gekennzeichnet, dass** er einem Hauptzylinder (14) zugeordnet ist, der sich axial teilweise im Gehäuse (16) erstreckt, um den axialen Raumbedarf nach vorne der durch den Servomotor (10) und den Hauptzylinder (14) gebildeten Baugruppe zu verringern.
